# EUROPEAN PATENT APPLICATION

(11) **EP 4 272 986 A1**
(43) Date of publication of application: **08.11.2023**
(21) Application number: 22171220.1
(22) Date of filing: 02.05.2022
(51) Int. Cl.: B60K 5/12, G06F 30/23, F16F 15/08, F16F 1/38

(54) **ENGINE BRACKET AND METHOD OF CONSTRUCTING AN ENGINE BRACKET**

(71) Applicant: Vibracoustic SE, 64293 Darmstadt (DE)
(72) Inventor: Oguchi, Takahiro, Nisshin-shi Aichi 470-0126 (JP)
(74) Representative: Patentanwälte Olbricht Buchhold Keulertz

(57) **Abstract**

Disclosed is an engine bracket (2), with a bracket body (4), which consists of a first material with a first material stiffness and first attenuation coefficient, wherein the bracket body (4) has at least a first connection surface (16) and at least a first fastening structure (9) for arrangement on a body of a vehicle (52), at least a second connection surface (8) and at least a second fastening structure (6) for arrangement on a drive unit of the vehicle, wherein the bracket body (4) is at least partially provided with an attenuation structure (24) consisting of a second, plastic material with a second material stiffness and a second attenuation coefficient, wherein the second, plastic material is overmolded, wherein the second material stiffness is lower than the first material stiffness and/or the second attenuation coefficient is higher than the first attenuation coefficient.

## Description

The present invention relates to an engine bracket and a method of constructing an engine bracket.

Engine brackets and methods of constructing engine brackets are generally known in the prior art. Engine brackets are regularly used in automotive applications to support different types of engines, e.g., combustion engines like fuel engines or diesel engines, or electric engines. Such engine brackets are regularly attached, directly or indirectly, to the engine on one side and, directly or indirectly, to a body (including a chassis) of the vehicle on the other side.

Engine mounts have multiple purposes to serve. First, they need to allow for a relative displacement of the engine relative to a body. In most circumstances, engines are connected to a drive shaft, which itself is connected, directly or indirectly, to wheels of the vehicle, which move relative to the vehicle body during driving. Via the aforementioned connection, the movement of the wheels relative to the body might exert a force on the engine, displacing the engine relative to the body of the car. This is usually accomplished by the use of one or more elastomeric bushings in the engine bracket. Second, to improve the NVH properties of the vehicle, the engine bracket should not transmit vibrations caused by the engine to the body and should not generate noise itself if exerted. Third, to improve dynamic properties as well as fuel economy of the vehicle, engine brackets should be as lightweight as possible.

Since it is typical for most solid bodies to show resonant behavior, for example one or more eigenmodes, during construction of an engine bracket, the exertion spectrum of the to-be-mounted engine should be taken into consideration, leading to different designs for different types of engines with different frequency spectra.

US 11,022,195 B2 discloses an elastic mount for absorbing static and dynamic loads of a vehicle part, comprising an inner part to which the vehicle part can be fixed, an outer part which can be inserted into a receiving eye, and at least one elastomer mount which elastically connects the inner part and the outer part.

It is an object of the invention to overcome the limitations of the prior art solutions and provide for an engine bracket that has a better resonance behavior than known engine brackets.

The object is solved by an engine bracket according to claim 1 and a method of constructing an engine bracket according to independent claim 6. Further embodiments are described in dependent claims.

Hereinafter, an engine bracket with a bracket body is described, which consists of a first material with a first material stiffness and first attenuation coefficient, wherein the bracket body has at least a first connection surface and at least a first fastening structure for arrangement on a body of a vehicle, at least a second connection surface and at least a second fastening structure for arrangement on a drive unit of the vehicle, wherein the bracket body is at least partially provided with an attenuation structure consisting of a second, plastic material with a second material stiffness and a second attenuation coefficient, wherein the second, plastic material is overmolded, wherein the second material stiffness is lower than the first material stiffness and/or the second attenuation coefficient is higher than the first attenuation coefficient.

In one embodiment, the engine bracket may be made out of metal. Metal is very rigid, resistant to extreme temperatures and durable.

In a different embodiment, the engine bracket may be made out of a first plastic material. Plastic is lighter than metal and can be shaped in more complex shapes using manufacturing technologies such as molding. Such plastic material may be a rigid polymer, such as PA 6.6.

In a further embodiment, metal and plastic materials might be combined, such that, for example, a metal core is surrounded by the first plastic material.

The first fastening structure and the second fastening structure can be positioned on opposite sides of the bracket body. Also, the first connection surface and the second connection surface can be positioned on the same side, or opposite sides of the bracket body and they can face in the same direction or in different directions. Some embodiments might comprise multiple fastening structures to be attached to the body of the vehicle or the engine, such as multiple sockets. This can be necessary for example to increase the strength of the connection between the engine bracket and the respective engine and/or body part. Those fastening structures can be positioned adjacent to each other or distributed, for example on either side of the respective other fastening structure.

The first connection surface and/or the second connection surface can be designed to create a two-dimensional or planar connection to the respective body or engine so as to increase the surface area available for force transfer, thereby reducing peaks in material tension under static or dynamic load.

The location of the first fastening structure and the first connection surface can overlap as well as the location of the second fastening structure and the second connection surface to reduce shear forces.

It has been surprisingly found that the use of an attenuation structure with a second plastic material with different material properties than the first material has a significant impact on the resonance behavior of the engine bracket. If the second plastic material is overmolded, it creates a bond to the first material and thereby changes its surface boundary conditions of the bracket body. If the second material stiffness is lower than the first material stiffness and/or if the second attenuation coefficient is higher than the first attenuation coefficient, the application of the overmolded second plastic material can eliminate eigenmodes and/or move eigenmodes into uncritical frequency ranges and/or significantly reduce eigenmode amplitudes compared to engine brackets without the attenuation structure by converting kinetic energy into thermal energy which can then dissipate into the environment.

As second, plastic material, a thermoplastic elastomer (TPE) may be chosen which has found to provide a strong material bond with the first material.

According to a first further embodiment, the bracket body comprises vibration zones, wherein the attenuation structure covers at least parts of or all of the vibration zones or the vibration zones are at least partially or completely overmolded with the second plastic material.

Focusing the application of the second material to certain vibration zones allows for a reduction in size and weight of the engine bracket, thereby effectively eliminating negative NVH properties while maintaining a low weight and small packaging.

According to another further embodiment, the at least one first connection surface and/or at least one first fastening structure and/or at least a second connection surface and/or the at least one second fastening structure are not overmolded.

This allows for a more rigid connection between the engine bracket and the engine and/or the engine bracket and the body part, as the lack of the second plastic material with lower material stiffness and/or higher attenuation coefficient reduces undefined dimensions of freedom of movement.

According to another further embodiment, the bracket body comprises stiffening ribs.

The use of bodies comprising stiffening ribs significantly reduces weight compared to solid bodies with the same material properties.

According to another further embodiment, the at least one first fastening structure and/or the at least one second fastening structure comprise at least one through hole and/or socket.

This way, the engine bracket can be mounted to another component forming a robust connection.

A first independent aspect relates to a method of constructing an engine bracket according to the above description, wherein a computer model of a bracket body made of a first material is provided and examined for eigenmodes and vibration zones using a finite element simulation method, wherein vibration zones are identified, wherein, at the vibration zones, an attenuation structure is constructed from the second plastic material.

Using finite element computer models of an engine bracket allows for identification of vibration zones that require attenuation. Such vibration zones could be local eigenmodes of areas of high amplitudes or global eigenmodes of the engine bracket.

The computer model can comprise all relevant design features of the engine bracket including shapes and material used. That way, resonant behavior can be numerically simulated.

Different methods can be used to identify the eigenmodes of the engine bracket such as numeric modal analysis or frequency response analysis.

According to a first further embodiment, a computer model of the engine bracket is provided and examined using a finite element simulation method for eigenmodes.

That way, the effectiveness of the application of the second plastic material can be confirmed and fine-tuned.

Further features and details will be shown in the following description in which - where applicable with reference to the drawings - at least one exemplary embodiment will be described in detail. Described and/or shown features constitute the subject in itself or in any possible and meaningful combination, eventually also independent from the claims. In particular, they can be subject of one or more separate applications. The figures show schematically:
- Fig. 1: a three-dimensional view a first embodiment of the engine bracket showing overmolded areas;
- Fig. 2: a three-dimensional explosion view of the engine bracket of Fig. 1;
- Fig. 3: a three-dimensional view of the engine bracket of Fig. 1, wherein the overmolded area and a non-overmolded area are shown separately;
- Fig. 4: a three-dimensional view of a second embodiment of an engine bracket with overmolded areas;
- Fig. 5: a three-dimensional view of the engine bracket of Fig. 4, wherein the overmolded area and a non-overmolded area are shown separately;
- Fig. 6: frequency response curve diagrams of engine bracket 2 of Fig 1 in x-, y-, and z-direction;
- Fig. 7: a workflow of constructing an engine bracket, and
- Fig. 8: a top view of a car with an engine mounted using engine brackets according to Fig. 1.

To improve readability and clarity, identical or similar features or features with identical or similar properties or functions in different embodiments may be numbered with the same reference numbers.

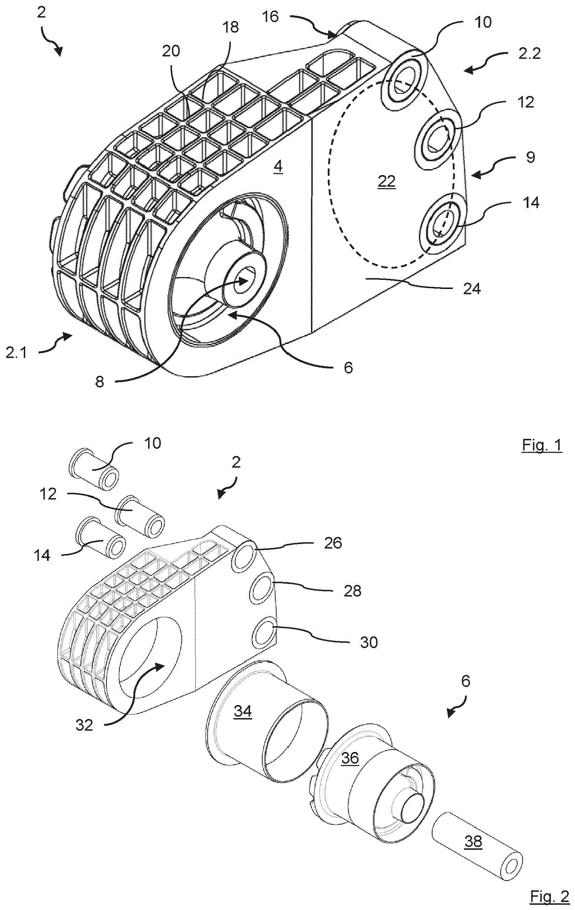

Fig. 1 shows an engine bracket 2 according to a first embodiment in a three-dimensional view.

The engine bracket 2 comprises a bracket body 4 made out of a rigid plastic material, such as PA 6.6, with known physical properties, in particular a first material stiffness and a first attenuation coefficient.

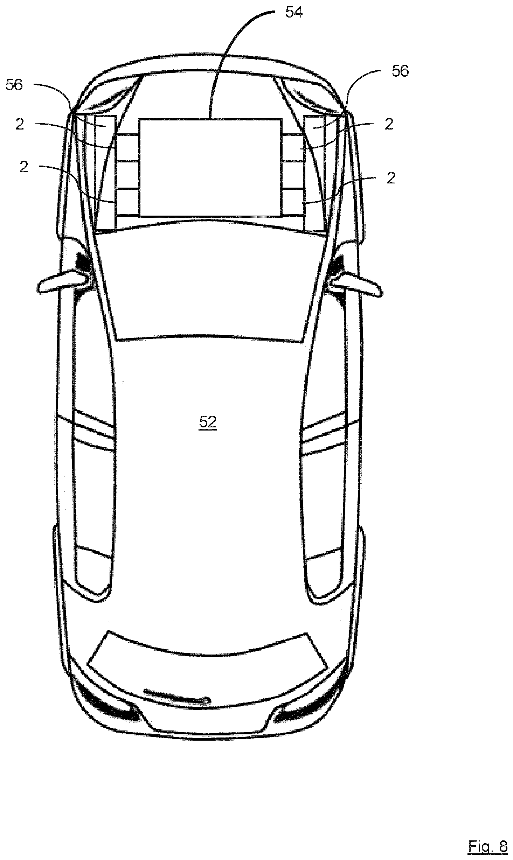

On a first side 2.1 of the engine bracket 2, a bushing 6 is located which is designed to be connected to an engine of a vehicle, such as a car (see Fig. 8). The bushing 6 has the function of a fastening structure. The engine can be a combustion engine like a fuel or diesel engine or an electric engine. Such engines, which have oscillating and/or rotating components, exert vibrations due to imbalances or due to the functional principle of the engine which might create oscillating momenta that do not completely extinguish themselves under all conditions. The bushing 6 comprises a first connection surface 8 to be connected to a rod of the or attached to the engine.

On a second side 2.2 of the engine bracket 2, a second fastening structure 9 consisting of three sockets 10, 12, 14 is provided. The sockets 10, 12, 14 are designed to accept bolts or screws to be attached to a body of the vehicle such as a load-bearing component, e.g., a beam. A connection surface 16 creates a two-dimensional connection to such body in order to reduce tension in the bracket body 4 and thereby increase its stability, although the connection surface 16 can have a complex, three-dimensional shape.

The bracket body 4 comprises a number of stiffening ribs 18, 20 that help to reduce the weight of the bracket body 4 while maintaining its structural integrity under load. The stiffening ribs 18, 20 are generally arranged such that they can absorb a static load of the engine to be held by the engine bracket 2, and additional dynamic loads while driving the vehicle.

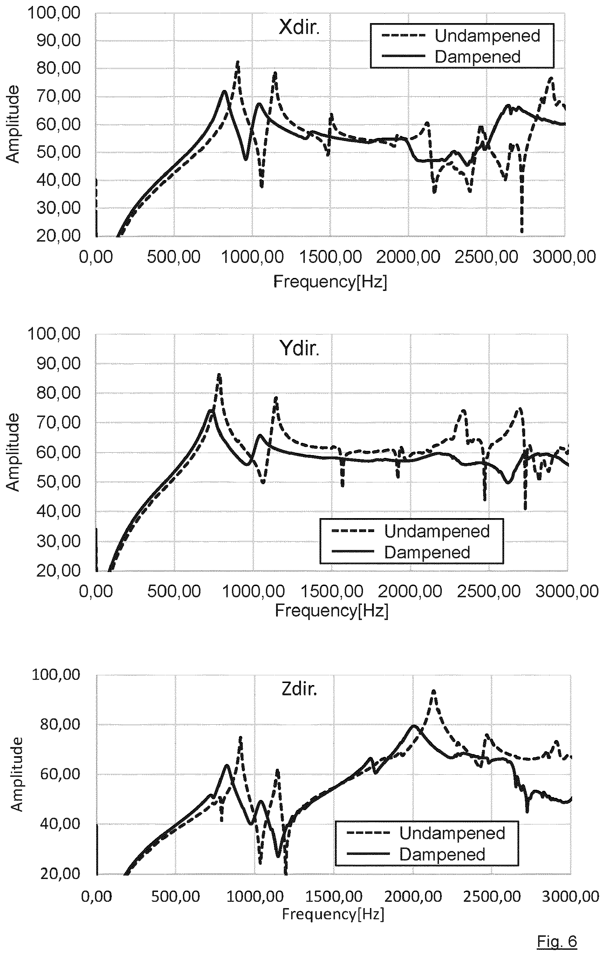

The engine bracket 2 has a certain frequency behavior (see. Fig. 6), in particular, it has certain resonance frequency ranges in which the engine bracket 2 shows high amplitudes of vibrations if exerted externally. The amplitudes of vibration can be contained locally, or they can appear over the full bracket body 4. In the given design, the engine bracket 2 has a local vibration zone 22, in which external vibrations in the resonance frequency range lead to particularly high amplitudes which can cause rattling and other noises and material weakening.

To eliminate the resonant frequencies, the bracket body 4 is overmolded with a second plastic (dampening) material forming an attenuation structure 24, which is designed as a layer of the second plastic material covering certain areas of the bracket body 4 as described hereafter. The attenuation structure 24 is bonded to the bracket body 4 in a 2K-molding process, in which in a first step, the bracket body 4 is formed and in a second step, the attenuation structure 24 is molded onto the bracket body 4, forming a layer of approximately even thickness. In other embodiments, the thickness of the layer might be different.

The second plastic material is a thermoplastic elastomer (TPE) with a lower material stiffness than the material of the bracket body 4 and a higher attenuation coefficient.

The first plastic material of the bracket body 4 and the second plastic material of the attenuation structure 24 form a chemical bond. This chemical bond changes the boundary conditions of the bracket body 4, thereby influencing the bracket body's 4 frequency response and eliminating the tendency to exhibit high amplitudes in resonant excitation circumstances. The dampening properties of the attenuation structure 24 can, in some instances, completely eliminate eigenmodes, and in other instances move the eigenmodes to uncritical frequencies and/or uncritical amplitudes.

Fig. 2 shows an explosion view of the engine bracket 2 of Fig. 1.

The sockets 10, 12, 14 according to the first embodiment are separate components made out of metal. The sockets 10, 12, 14 are inserted into reinforced through holes 26, 28, 30 of the bracket body 4.

The bushing 6, which is inserted into a reinforced through hole 32, is made out of multiple components; a socket 34, an elastomeric bushing body 36, and a sleeve 38. The sleeve 38, which will connect to a rod of the engine to be held by the engine bracket 2, is inserted into the bushing body 36, which itself is inserted into the socket 34. An inner cylindrical surface of of the sleeve 38 forms the connection surface 8.

The reinforcements of sockets 10, 12, 14, and through hole 32 are achieved via higher material thicknesses of the first plastic material compared to the rest of the bracket body 4.

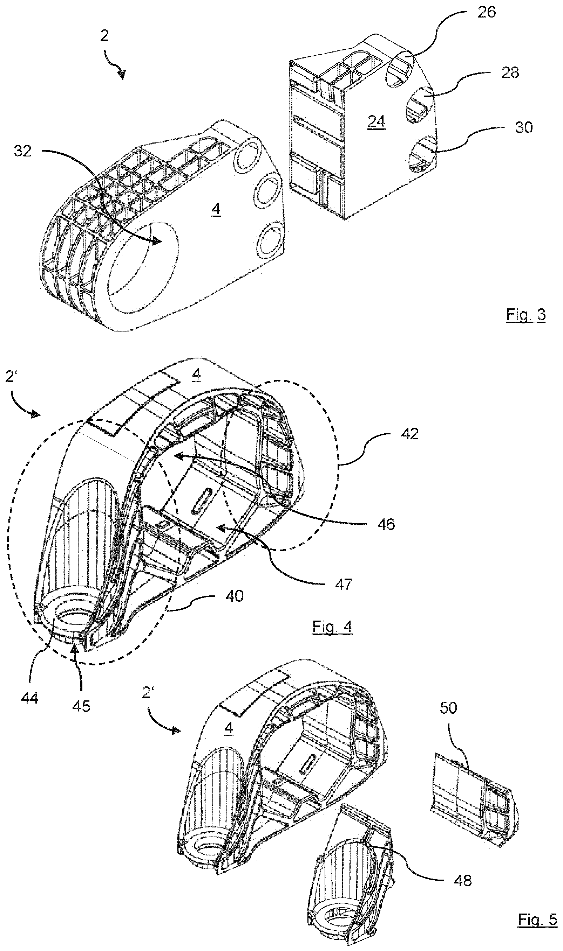

Fig. 3 shows bracket body 4 and attenuation structure 24 in an explosion view.

The attenuation structure 24 only covers the parts of the bracket body 4 close to the second side 2.2 and leaves out areas on the first side 2.1. Therefore, through holes 26, 28, 30 are lined with the attenuation structure 24, whereas the through hole 32 is not equipped with an attenuation structure.

Fig. 4 shows a three-dimensional view of a second embodiment of an engine bracket 2'.

The engine bracket 2' comprises two vibration zones 40, 42. The vibration zone 40 is located at a through hole 44 at a connection surface 45 for attaching the engine bracket 2' to a body of a vehicle. The vibration zone 42 is located on the opposite side of a fastening structure 46 of the bracket body 4, where a second fastening structure to the body of the vehicle is arranged that is similarly configured to the through hole 44, as it also comprises a connection surface and a through hole (not visible in Fig. 4 due to the angle of view).

The fastening structure 46 has a connection surface 47 to accept a bushing to be attached to an engine of the vehicle.

As can be seen in Fig. 5, attenuation structures 48, 50 made out of the second plastic material are located only on one side of the bracket body 4 - the underside relative to the views shown in Figs. 4 and 5.

The engine bracket 2' is manufactured in a 2K-molding process, in which, in a first step, the bracket body 4 is molded and in a second step, attenuation structures 48, 50 are overmolded over the bracket body 4.

Fig. 6 shows frequency response curve diagrams of engine bracket 2 of Fig 1 in x-, y-, and z-direction.

Each response curve diagram shows two curves, an undampened curve (in dotted lines) and a dampened curve (in solid lines). The undampened curves are the result of FEM analyses on the engine bracket 2 without the presence of the attenuation structure. The dampened curves are the result of FEM analyses on the engine bracket 2 with an applied attenuation structure.

The undampened frequency response curves generally show multiple eigenmode peaks over the displayed frequency range of 0 to 3000 Hz. Those eigenmode peaks are steep and have high amplitudes. The respective frequency behavior of such bracket can be the root cause for noise generated by the engine bracket 2. In addition, the high amplitudes can cause weakening of the material of the bracket body 4 over time, increasing the risk of defects.

In comparison, dampening the engine bracket 2 by applying the attenuation structure 24 has a number of beneficial effects: first, it leads to the elimination of a number of eigenmode peaks. Second, where peaks remain in existence, the amplitudes are significantly lowered compared to the undampened situation. Third, it is generally found that the peaks are also shifted towards lower frequencies.

Overall, the frequency behavior of the engine bracket 2 including an attenuation structure 24 is more favorable than without the dampening structure as the NVH behavior of engine bracket 2 is improved.

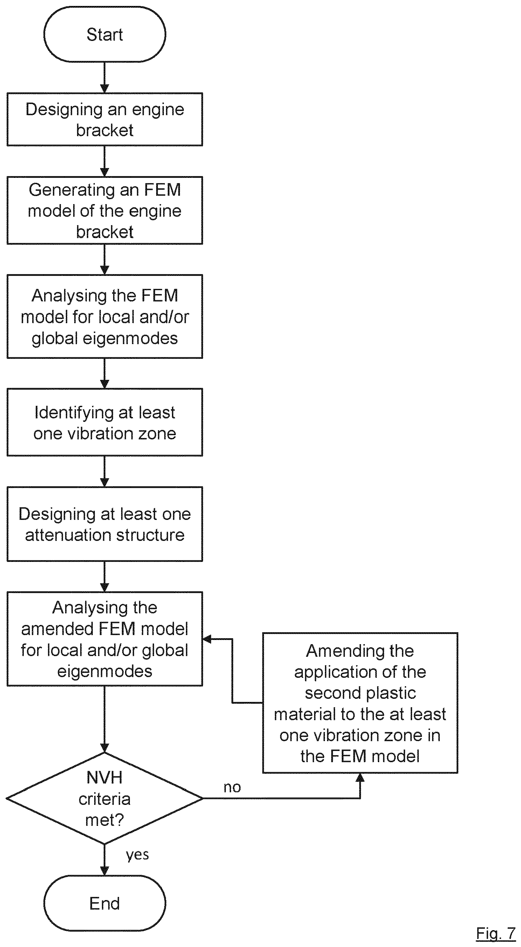

Fig. 7 shows a flow chart of a design process for designing an engine bracket.

In a first step, the engine bracket is designed using details of the respective use case, which includes geometrical considerations, load considerations, environmental conditions, material selection, etc. The design usually starts with designing the bracket body, and, where needed, bushings, sockets, sleeves, etc, including their location and their dimensions depending on the circumstances.

In a next step, an FEM model of the engine bracket is generated. Usually, this step is performed by the design software used to design the engine bracket.

The FEM model is then analyzed for local and/or global eigenmodes using numerical models that exert the FEM model and simulate the frequency response.

If at least one vibration zone is identified, an attenuation structure is designed. The attenuation structure can cover the vibration zone, or it can be located adjacent to the vibration zone, depending on the respective boundary conditions like available space, heat exposure etc.

In a further step, the amended FEM model is analyzed again for local and/or global eigenmodes. If the amended design meets the required NVH behavior, in particular sufficient dampening of any resonant frequencies. If the criteria are met, this particular part of the design process ends.

If the NVH criteria are not met, the design is amended and tested again. This process can be performed in an iterative manner until a desired behavior of the engine bracket is achieved.

The process as described above can be performed using automated tools, in particular such using machine learning methods such as reinforcement learning.

A respective embodiment could vary the application of the dampening structure and investigate the impact on the NVH behavior of the engine bracket to identify an optimum design that creates a desired NVH behavior with minimum weight and manufacturing costs.

Fig. 8 shows a top view of a car 52 with an engine 54 mounted using engine brackets 2 according to Fig. 1.

The car 2 comprises a structure of multiple load-bearing beams and chassis components, including longitudinal beams 56 as displayed.

The engine brackets 2 are mounted to those longitudinal beams 56 via their respective fasting structures 9 (not shown in Fig. 8) and to the engine 54 via their respective bushings 6. The engine 54 is therefore able to move relative to the longitudinal beams 56 of the car 2.

While at least one exemplary embodiment has been presented in the foregoing summary and detailed description as well as the claims, it should be appreciated that a vast number of variations exist. It should also be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents.

Any feature disclosed in the claims, the description, and the drawings, including constructive details, relative positioning or method steps can be relevant to the invention taken in isolation or in any meaningful combination with any other feature(s).

### List of reference numbers

- 2, 2': Engine bracket
- 2.1: First side
- 2.2: Second side
- 4: Bracket body
- 6: Bushing
- 8: Connection surface
- 9: Fastening structure
- 10, 12, 14: Socket
- 16: Connection surface
- 18, 20: Stiffening rib
- 22: Vibration zone
- 24: Attenuation structure
- 26, 28, 30: Through hole
- 32: Through hole
- 34: Socket
- 36: Bushing body
- 38: Sleeve
- 40, 42: Vibration zone
- 44: Through hole
- 45: Connection surface
- 46: Fastening structure
- 47: Connection surface
- 48, 50: Attenuation structure
- 52: Car
- 54: Engine
- 56: Longitudinal beam

## Claims

1. Engine bracket (2, 2'), with a bracket body (4), which consists of a first material with a first material stiffness and first attenuation coefficient, wherein the bracket body (4) has at least a first connection surface (16; 45) and at least a first fastening structure (9; 44) for arrangement on a body of a vehicle, at least a second connection surface (8; 47) and at least a second fastening structure (6) for arrangement on a drive unit of the vehicle (52), wherein the bracket body (4) is at least partially provided with an attenuation structure (24; 48, 50) consisting of a second, plastic material with a second material stiffness and a second attenuation coefficient, wherein the second, plastic material is overmolded, wherein the second material stiffness is lower than the first material stiffness and/or the second attenuation coefficient is higher than the first attenuation coefficient.

2. Engine bracket (2, 2') according to claim 1, wherein the bracket body (4) comprises vibration zones (22; 40, 42), wherein the attenuation structure (24; 48, 50) covers at least parts of or all of the vibration zones (22; 40, 42) or the vibration zones (22; 40, 42) are at least partially or completely overmolded with the second, plastic material.

3. Engine bracket (2, 2') according to claim 1 or 2, wherein the at least one first connection surface (16; 45) and/or at least one first fastening structure (9; 44) and/or the at least a second connection surface (8; 47) and/or the at least one second fastening structure (6) are not overmolded.

4. Engine bracket (2, 2') according to any one of the preceding claims, wherein the bracket body (4) comprises stiffening ribs (18, 20).

5. Engine bracket (2, 2') according to any one of the preceding claims, wherein the at least one first fastening structure (9; 44) and/or the at least one second fastening structure (6) comprise at least one through hole (26, 28, 30, 32; 44) and/or socket (10, 12, 14, 34).

6. A method of constructing an engine bracket (2, 2') according to any one of the preceding claims, wherein a computer model of a bracket body (4) made of a first material is provided and examined for eigenmodes and vibration zones (22; 40, 42) using a finite element simulation method, wherein vibration zones (22; 40, 42) are identified, wherein, at the vibration zones (22; 40, 42), an attenuation structure (24; 48, 50) is constructed from the second, plastic material.

7. The method of claim 6, wherein a computer model of the engine bracket (2, 2') is provided and examined using a finite element simulation method for eigenmodes.
